# DEMANDE DE BREVET EUROPEEN

(11) **EP 3 671 598 A1**
(43) Date de publication de la demande: **24.06.2020**
(21) Numéro de dépôt: 19209210.4
(22) Date de dépôt: 14.11.2019
(51) Int. Cl.: G06Q 10/10

(54) **REGISTRES DISTRIBUES POUR LE PARTAGE DE DONNEES EN AERONAUTIQUE**

(30) Priorité: 21.12.2018 FR 1873873
(71) Demandeur: Thales, 92400 Courbevoie (FR)
(72) Inventeur: COULMEAU, François, 31100 TOULOUSE CEDEX (FR); PABIA, Guillaume, 33700 MERIGNAC (FR)
(74) Mandataire: Lucas, Laurent Jacques

(57) **Abrégé**

Le document décrit des systèmes et des procédés mis en œuvre par ordinateur pour le partage de données aéronautiques, comprenant les étapes consistant à : maintenir une chaîne de blocs privée, ladite chaîne de blocs impliquant une pluralité de parties prédéfinies; communiquer conditionnellement des données aéronautiques, en réponse à une requête d'une partie en fonction d'un mécanisme de contrôle des échanges, les données préalablement collectées depuis des calculateurs aéronautiques e.g. systèmes de gestion de vol FMS embarqués dans des aéronefs. Des développements décrivent notamment l'usage: de mécanismes de compensation, de rétribution et de gestion des droits d'accès et/ou de licences d'utilisation; de contrats intelligents ; de mécanismes d'enchère ou de cotation des jeux de données; de gestion de données avioniques et non-avioniques; de techniques d'apprentissage effectuées sur les données partagées et consolidées ; de gestion de chaines de blocs dérivées ; de chiffrement post-quantique. Des aspects de logiciel sont décrits.

## Description

### Domaine de l'invention

Le document concerne le domaine technique général du traitement de l'information. En particulier, le document décrit des systèmes et des procédés pour le partage de données en aéronautique, en utilisant notamment des bases de données distribuées.

### Technique antérieure

Le partage de données entre acteurs industriels d'un même secteur est toujours un enjeu, où coopération et concurrence se mélangent. Des motivations à partager les données se heurtent souvent à des velléités de constituer un corpus privé, à des fins exclusives. Indépendamment des stratégies des acteurs industriels, sur le fond, pour l'extraction de données de valeur, il reste avantageux d'accumuler de grandes quantités de données (e.g. croisements, corrélations, apprentissage, etc).

Certaines technologies, notamment les *chaînes de blocs (« blockchain » en anglais) ou registres distribués (« distributed ledger » en anglais),* si elles sont adaptées de manière appropriée, peuvent redéfinir les enjeux du partage de données et présenter des opportunités quant à de nouvelles modalités de partage.

Dans l'écosystème complexe de l'aéronautique, les calculateurs de vol produisent une grande quantité de données, lesquelles peuvent être intéressantes pour nombre d'acteurs industriels (constructeurs d'avion, équipementiers, pilotes et compagnies aériennes, autorités du contrôle du trafic, etc). Ces mêmes acteurs produisent également de très grandes quantités de données, aboutissant à la création de silos de données qui ne sont généralement pas partagés. A défaut d'être exploitées en commun, nombre d'opportunités sont probablement manquées. Les données peuvent être enrichies et de la valeur peut être extraite des silos, selon une grande diversité d'approches.

Les exploitants de taille modeste qui disposent d'un nombre d'appareils réduit ont un intérêt réel pour le partage de données, car les algorithmes permettant d'extraire de la valeur des données nécessitent de grands volumes pour être précis et fiables. Or la majorité des exploitants d'aéronefs relèvent de cette catégorie (peu d'appareils en exploitation), comparé aux quelques grandes compagnies qui peuvent disposer de jeu de données suffisants pour en faire l'analyse.

Dans le même temps que les données sont partagées, il est important de pouvoir s'assurer de leur bonne provenance (authenticité) et de leur transmission conforme (intégrité).

Enfin, il est important de trouver des mécanismes tendant vers une rétribution juste des contributions, à tout le moins suffisamment attractifs pour inciter au partage. Dans les approches connues, ces aspects sont résolus de manière non-technique, i.e. généralement par contrats (par exemple avec un ou plusieurs intermédiaires ou des *brokers* qui spécifient et monnaient les jeux de données qu'un fournisseur doit produire pour un client).

En matière de *chaînes de blocs* (que l'on peut également trouver sous la terminologie de DLT acronyme de « *Distributed Ledger Technology* ») appliquées au contexte spécifique de l'aéronautique, tout reste à faire. Les publications autour de la *blockchain* sont presque exclusivement en anglais et généralement orientées vers Bitcoin et les applications financières. La littérature brevet retourne fin 2018 seulement deux publications FR3062499 et FR3063406, lesquelles sont intéressantes mais ne sont pas pertinentes au regard des problèmes techniques posés.

Le brevet EP3367137 intitulé *"Systems and methods of gathering and distributing critical weather event information"* décrit un système de partage d'informations critiques de météorologie entre plusieurs avions. Un centre au sol (intermédiaire) est chargé de gérer les demandes entre les différents avions (clients et fournisseurs). Cette solution est satisfaisante dans certaines situations mais présente des limitations au regard d'une coopération élargie. Par exemple, les exemples décrits prévoient la présence d'un intermédiaire, qui s'ajoute donc dans l'écosystème déjà complexe de l'aéronautique. Par ailleurs, le transfert d'informations ne s'effectue qu'entre avions; il ne s'appuie notamment pas sur des ressources (pourtant beaucoup plus nombreuses) issues du « monde ouvert » (i.e. au-delà du cadre réglementaire, e.g. données internet). Le type de base de données utilisé n'est pas explicité. Seules les informations météorologiques sont considérées comme critiques ; les informations d'optimisation de vol ne sont par exemple pas considérées, or ces informations peuvent avoir une grande « valeur ».

En matière avionique, le reliquat considérable d'informations brutes générées par les calculateurs embarqués dans un aéronef (par exemple) est la propriété *exclusive* du fournisseur de ce calculateur. Des licences peuvent être mises en place, en général entre le fournisseur et l'utilisateur (le constructeur, l'assembleur, le client, une autorité de régulation), pour permettre à ce dernier d'utiliser lesdites informations. Ce modèle présente des limitations et peut considérablement évoluer.

### Résumé de l'invention

Le document décrit des systèmes et des procédés mis en œuvre par ordinateur pour le partage de données aéronautiques, comprenant les étapes consistant à : maintenir une chaîne de blocs privée, ladite chaîne de blocs impliquant une pluralité de parties prédéfinies; communiquer conditionnellement des données aéronautiques, en réponse à une requête d'une partie en fonction d'un mécanisme de contrôle des échanges, les données préalablement collectées depuis des calculateurs aéronautiques e.g. systèmes de gestion de vol FMS embarqués dans des aéronefs. Des développements décrivent notamment l'usage: de mécanismes de compensation, de rétribution et de gestion des droits d'accès et/ou de licences d'utilisation; de contrats intelligents ; de mécanismes d'enchère ou de cotation des jeux de données; de gestion de données avioniques et non-avioniques; de techniques d'apprentissage effectuées sur les données partagées et consolidées ; de gestion de chaines de blocs dérivées ; de chiffrement post-quantique. Des aspects de logiciel sont décrits.

Dans un mode de réalisation, une ou plusieurs chaînes de blocs sont utilisées pour stocker et partager les données (en assurant donc leur qualité (e.g. horodatage, intégrité, validation par consensus, etc). Optionnellement, le partage de ces données (e.g. transactions) est géré (ou permise ou contrôlée) par un ou plusieurs contrats intelligents (e.g. accès aux données par les utilisateurs, gestion des droits, etc.).

Avantageusement, le partage et l'analyse d'informations aéronautiques sont améliorés. Les données brutes ou traitées, par exemple issues de calculateurs aéronautiques dans une communauté de fournisseurs de calculateurs ou d'utilisateurs de ces calculateurs, sont collectées afin d'en extraire des informations enrichies ayant une valeur technique et/ou métier.

Avantageusement, l'authenticité et l'intégrité des données manipulées sont garanties du fait de l'emploi d'une chaîne de blocs.

Avantageusement, les échanges (ou contributions) peuvent être surveillés, inscrits et suivis de manière claire et transparente, de telle manière que les incitations à partager s'en trouvent renforcées. Des données « inutiles » à une partie donnée peuvent être d'une grande valeur pour une autre partie (par exemple un « slot » libre pré réservé pour le débarquement d'un avion - et inutilisé - peut être racheté par une société tierce si l'information de disponibilité est publiée).

Avantageusement, le partage d'information est encouragé, par construction, en plus d'être sécurisé.

Avantageusement, en implémentant les procédés d'échanges selon l'invention, le recours à des intermédiaires intervenant dans la gestion des échanges de données peuvent être évités ou amoindri. La concentration des données par un seul acteur (ou intermédiaire), ou quelques parties (grandes compagnies par exemples), est généralement sous-optimale car elle ne permet pas un traitement général, accessible facilement à tous les fournisseurs et utilisateurs, quelle que soit leur taille. Elle biaise les accès aux données, augmente les coûts de transaction, disperse les droits, etc. La centralisation des données peut amoindrir la récolte quantitative et/ou qualitative des données par manque de réciprocité ou d'intérêt, ou encore du fait de la complexité d'accès aux données. Par suite, les enseignements ou analyses tirées des données sont de moindre qualité, au détriment des clients finaux (e.g. expérience utilisateur, sûreté aéronautique, etc). *A contrario,* l'invention permet d'augmenter la capture de données, et par suite la qualité des analyses qui en est dérivée (« analytics »). D'échanges sous optimaux, l'invention permet des échanges fluides et transparents entre acteurs, dans lesquels les incitations à partager sont assainies, les partages étant rétribués et les parties étant notées de manière transparente sinon prédictible, et ce quelle que soit leur taille dans la communauté industrielle.

Selon l'invention, chaque partie prenante à la chaîne de blocs aéronautique est donc libre de se concentrer sur son métier et de bénéficier d'externalités positives créées par d'autres à partir de ses propres données, autrement inutiles. Une partie n'aura pas, ou moins, à se procurer via un intermédiaire un jeu de données transformées qui ne correspond pas nécessairement à ses besoins spécifiques (moindre contrôle au sens I.A. car dépendant des algorithmes qui auront été développés par cet l'intermédiaire).

En avionique, l'application de technologies d'Intelligence Artificielle (essentiellement d'apprentissage automatique) couplées au déploiement massif de la connectivité entre les aéronefs et/ou le sol permet l'utilisation massive de toutes ces données (approche dite « Big Data ») à des fins avantageuses et diverses e.g. amélioration de la maintenance par analyse d'une pluralité de sources au fil du temps ; émergence de services à valeur ajoutée pour les opérations aériennes e.g. estimation des retards, des surconsommations de carburant, optimisation des trajectoires, anticipation des flux, de la météo, etc ; amélioration de la sécurité et/ou de la sûreté des vols, par exemple par analyse des flux et par la détection anticipée d'anomalies latentes ou difficilement prédictibles *a priori* ; amélioration de l'expérience passager par fourniture de biens et services ciblés ; amélioration de la gestion de mission lorsque de nombreux aéronefs sont engagés, par exemple des drones, etc.

Des données aéronautiques nouvelles, complémentaires, additionnelles, récentes, ou autrement enrichies peuvent être manipulées.

En intégrant d'une manière spécifique (i.e. appropriée eu égard aux problématiques métiers de l'aéronautique), les technologies relatives aux chaînes de blocs et aux contrats intelligents, les procédés et systèmes selon l'invention permettent *in fine* d'améliorer la sûreté aéronautique. Cette sûreté est fondamentale dans cette industrie. Les architectures aéronautiques existantes sont très fermées (il existe peu de liens existant entre systèmes, du fait de crainte de corruptions de données, d'attaques, de risques systémiques, etc) ; la solution proposée peut améliorer significativement la gestion technique de données inter-systèmes, en augmentant les surfaces d'analyse (quantité de données) et la qualité des analyses conduites.

### Description des figures

D'autres caractéristiques et avantages de l'invention apparaîtront à l'aide de la description qui suit et des figures des dessins annexés dans lesquels:
La figure 1 illustre le fonctionnement d'une chaîne de blocs selon l'invention;

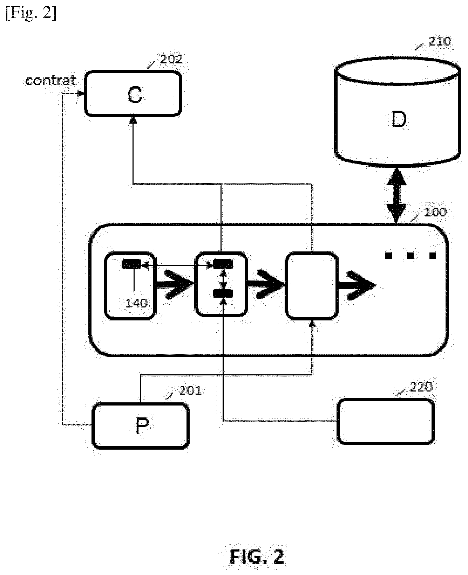

La figure 2 illustre des exemples d'étapes d'un mode de réalisation du procédé selon l'invention.

### Description détaillée de l'invention

Les modes de réalisation de l'invention peuvent utiliser des « *chaînes de blocs »,* pour améliorer l' « *apprentissage automatique* » réalisé sur des « *Big data ».* Ces objets ou expressions sont définies et explicitées ci-après.

Ces objets possèdent des propriétés intrinsèques, i.e. qui leur sont inhérentes et sont indépendantes du contexte d'utilisation. Cependant, les contraintes ou exigences aéronautiques sont nombreuses et complexes. Les contraintes et compromis « métier » sont difficiles à identifier clairement (invention de problème) et justifient ou structurent de manière sous-jacente des variations d'implémentation, qui autrement pourraient apparaître comme arbitraires.

### « Big data »

L'expression anglaise "Big data" désigne la collecte et l'analyse de données, effectuées de manière massive. Ce concept est associé avec des caractéristiques de nature technique qui comprennent: le *volume* (e.g. grandes collections de données, même si elles sont redondantes), la *variété* (e.g. de nombreuses sources différentes sont utilisées), la *vélocité* (e.g. les données sont « fraiches » ou constamment mises à jour dans des environnements changeants ou dynamiques), attestant d'une certaine *véracité* (e.g. les signaux faibles qui sont noyés dans le bruit ne sont pas supprimés et peuvent par suite être détectés ou amplifiés), pour représenter *in fine* une certaine *valeur* (par exemple d'utilité du point de vue technique et/ou métier i.e. business).

### Apprentissage automatique

Différents types *d'apprentissage automatique* (ou machine) sont possibles. L'apprentissage automatique est un domaine de l'informatique qui utilise des techniques statistiques pour donner aux systèmes informatiques la possibilité "d'apprendre" avec des données (par exemple, pour améliorer progressivement les performances d'une tâche spécifique), et ce sans être explicitement programmé à cette fin.

L'apprentissage automatique est avantageux pour la détection et la reconnaissance des motifs ou schémas ou patterns. Il est fréquemment plus facile de collecter les données (par exemple, les données d'un jeu vidéo ou de société) que d'écrire explicitement le programme qui régit le jeu considéré. De plus, des réseaux de neurones (réalisation matérielle de l'apprentissage automatique, ou émulation logicielle) peuvent être réutilisés pour traiter de nouvelles données. L'apprentissage automatique peut être effectué sur des données particulièrement volumineuses, c'est-à-dire en utilisant autant de données que possible (e.g. stabilité, convergence, signaux faibles, etc). De nouvelles données peuvent être ajoutées en permanence et l'apprentissage peut être affiné.

Différents algorithmes d'apprentissage peuvent être utilisés, en combinaison avec les caractéristiques selon l'invention. Le procédé peut comprendre un ou plusieurs algorithmes parmi les algorithmes comprenant: les "machines à vecteur de support" ou "séparateurs à vaste marge" (en anglais « Support Vector Machine », acronyme SVM) ; le « boosting » (classifieurs); les réseaux de neurones (en apprentissage non-supervisé) ; les arbres de décision ("Random Forest"), les méthodes statistiques comme le modèle de mixture gaussienne ; la régression logistique ; l'analyse discriminante linéaire ; et les algorithmes génétiques.

Les tâches d'apprentissage automatique sont généralement classées en deux grandes catégories, selon qu'il existe un "signal" ou des entrées d'apprentissage ou des "retours d'information" ou sorties disponibles ».

L'expression « apprentissage supervisé" désigne une situation dans laquelle il est présenté à l'ordinateur des exemples d'entrées et des exemples de sorties (réelles ou souhaitées). L'apprentissage consiste alors en l'identification d'un entrelacs de règles fait correspondre les entrées aux sorties (ces règles peuvent être compréhensibles ou non pour l'homme).

L'expression «apprentissage semi-supervisé» désigne une situation dans laquelle l'ordinateur ne reçoit qu'un ensemble de données incomplet: par exemple il existe des données de sortie manquantes.

L'expression « apprentissage par renforcement» consiste à apprendre les actions à prendre, à partir d'expériences, de façon à optimiser une récompense quantitative au cours du temps. Au travers d'expériences itérées, un comportement décisionnel (appelé stratégie ou politique, qui est une fonction associant à l'état courant l'action à exécuter) est déterminé comme étant optimal, en ce qu'il maximise la somme des récompenses au cours du temps.

L'expression « *apprentissage non supervisé»* (également appelé apprentissage approfondi ou apprentissage profond) désigne une situation dans laquelle aucune annotation n'existe (pas de libellé, pas de description, etc), laissant l'algorithme d'apprentissage seul pour trouver une ou plusieurs structures, entre entrées et sorties. L'apprentissage non-supervisé peut être un objectif en soi (découverte de structures cachées dans les données) ou un moyen de parvenir à un objectif (apprentissage par les fonctionnalités).

Selon les modes de réalisation, la contribution humaine dans les étapes d'apprentissage automatique peut varier. Dans certains modes de réalisation, l'apprentissage automatique est appliqué à l'apprentissage automatique lui-même (réflexif). L'ensemble du processus d'apprentissage peut en effet être automatisé, notamment en utilisant plusieurs modèles et en comparant les résultats produits par ces modèles. Dans la plupart des cas, les humains participent à l'apprentissage automatique («*Human in the loop* »). Les développeurs ou curateurs sont responsables de la maintenance des amas de données: ingestion de données, nettoyage des données, découverte de modèles etc.

L'apprentissage automatique peut correspondre à des architectures matérielles qui sont émulables par ordinateur (e.g. CPU-GPU), mais parfois non (des circuits dédiés à l'apprentissage peuvent exister).

Différents algorithmes d'apprentissage peuvent être utilisés. Le procédé peut comprendre un ou plusieurs algorithmes parmi les algorithmes comprenant: les "machines à vecteur de support" ou "séparateurs à vaste marge" (en anglais « Support Vector Machine », acronyme SVM) ; le « boosting » (classifieurs); les réseaux de neurones (en apprentissage non-supervisé) ; les arbres de décision ("Random Forest"), les méthodes statistiques comme le modèle de mixture gaussienne ; la régression logistique ; l'analyse discriminante linéaire ; et les algorithmes génétiques.

Matériellement, selon les modes de réalisation, le procédé selon l'invention peut être mis en œuvre sur ou par un ou plusieurs réseaux de neurones. Un réseau de neurones selon l'invention peut être un ou plusieurs réseaux de neurones choisis parmi les réseaux de neurones comprenant : a) un réseau de neurones artificiels (en anglais « feedforward neural network »; b) un réseau de neurones artificiels acyclique, e.g. un perceptron multicouche, se distinguant ainsi des réseaux de neurones récurrents ; c) un réseau de neurones à propagation avant ; d) un réseau de neurones de *Hopfïeld* (un modèle de réseau de neurones récurrents à temps discret dont la matrice des connexions est symétrique et nulle sur la diagonale et où la dynamique est asynchrone, un seul neurone étant mis à jour à chaque unité de temps) ; e) un réseau de neurones récurrents (constitué d'unités interconnectées interagissant non-linéairement et pour lequel il existe au moins un cycle dans la structure) ; f) un réseau neuronal convolutif (en anglais « CNN » ou « ConvNet » pour « Convolutional Neural Networks », un type de réseau de neurones artificiels acycliques feedforward, par empilage multicouche de perceptrons) ou g) un réseau antagonistes génératifs (en anglais « *generative adversarial networks* » acronymes GANs, classe d'algorithmes d'apprentissage non-supervisé)

### Registres distribués ou chaînes de blocs

Selon la définition donnée par Wikipédia, une chaîne de blocs (« blockchain » en anglais) ou un registre distribué (DLT pour « *Distributed Ledger Technology* » en anglais) est une base de données distribuée et sécurisée par des techniques cryptographiques. Les transactions échangées sont groupées en « blocs » à intervalles de temps réguliers, de manière sécurisée par cryptographie, qui forment une chaîne. Après avoir enregistré les transactions récentes, un nouveau bloc est généré et analysé. Si le bloc est valide (consensus distribué), le bloc peut être horodaté et ajouté à la chaîne de blocs. Chaque bloc est lié au précédent par une clé de hachage. Une fois ajouté à la chaîne de blocs, un bloc ne peut plus être ni modifié ni supprimé, ce qui garantit l'authenticité et la sécurité du réseau. Le chainage utilise des fonctions de hachage et des arbres de Merkle. Un arbre de hachage est constitué par un ensemble de sommes de contrôle interdépendantes. Des sommes de contrôles sont concaténées selon une structure en arbre. Un arbre de hachage permet de pouvoir vérifier l'intégrité d'un ensemble de données sans disposer nécessairement de la totalité des données au moment de la vérification. Les enregistrements dans une chaîne de blocs sont protégés contre la falsification ou la modification par les nœuds de stockage : falsifier un bloc nécessite de falsifier l'ensemble de la chaîne, de sorte que le coût total devient prohibitif et garantit un niveau de confiance en la non-falsification de l'ensemble de la chaîne de blocs. Les transactions sont visibles dans l'ensemble du réseau (sauf élagage dit « pruning »).

Le temps est un facteur important pour les chaînes de blocs (notions de *broadcasting,* de propagation, de latence, etc.). Le consensus distribué de l'ensemble des nœuds du réseau peut prendre un temps très variable selon les technologies utilisées. Il peut être accéléré en utilisant diverses techniques, notamment des « *sidechains* », lesquelles augmentent aussi les capacités de stockage.

Dans le cadre du consensus distribué, une chaîne de blocs peut utiliser une validation par preuve de travail (« *proof of work* »). Du point de vue mathématique, une preuve de travail est « difficile à fournir mais facile à valider ». Les systèmes de validation par preuve sont généralement asymétriques: le calcul qui est requis en contrepartie d'une demande de service est couteux pour le demandeur mais demeure facilement vérifiable par un tiers. Différentes techniques peuvent être utilisées, notamment *hashcash* ou un "client-puzzle" e.g. patent US7197639.

Les nœuds « mineurs » ou de « minage » sont des entités dont le rôle est d'alimenter le réseau en puissance de calcul, pour permettre la mise à jour de la base de données décentralisée. Ces mineurs peuvent être rétribués par la distribution de jetons cryptographiques (« *tokens* »). D'autres modes de compensation (en complément ou par substitution) prévoient des commissions sur les transactions. Des « mineurs » ne sont pas toujours nécessaires : dans le cas des chaînes de blocs privées par exemple, les participants à la chaîne de blocs maintiennent eux-mêmes la base de données distribuée.

Une chaîne de blocs peut être publique ou privée, ou selon des gouvernances intermédiaires, qui peuvent utiliser différentes barrières à l'entrée (validation par preuve de travail). Une chaîne de blocs « publique » fonctionne sans tiers de confiance (modèle dit « *trustless* »), généralement avec une validation par preuve de travail complexe (e.g. *hashcash*)*.* Une chaîne de blocs publique ne définit généralement pas d'autre règle que celle du code constitué par la technologie protocolaire et logicielle qui la compose. Une chaîne de blocs « privée » comprend des nœuds participants au consensus qui sont définis à l'avance puis authentifiés. Ses règles de fonctionnement peuvent être éventuellement extrinsèques.

Les chaînes de blocs peuvent être ou devenir programmables par l'emploi de « contrats intelligents » (« *smart contracts* » en anglais). Les contrats intelligents sont des logiciels ou protocoles informatiques qui facilitent, vérifient et exécutent la négociation ou l'exécution d'un contrat. Ils visent à émuler ou approcher la logique des clauses contractuelles (droit des contrats). Les contrats intelligents ne sont pas strictement équivalents à des accords contractuels. Ils contribuent à rendre la violation d'un accord coûteux car ils contrôlent un bien par le biais de moyens numériques. Ils peuvent prévoir - ou pas - l'intervention de tiers au contrat pour suivre son exécution (par exemple des machines ou « oracles » ou services d'oracle. Un contrat intelligent sont un code logiciel qui est stocké et est exécuté sur/par une chaîne de blocs et est déclenché par des données externes qui lui permet de modifier d'autres données, dans la chaîne de blocs ou ailleurs.

L'exécution d'un contrat intelligent est prédictible/prévisible; à tout le moins le code et donc la nature des calculs ou tests effectués par ce code sont connus. Le code d'un contrat intelligent est stocké sur ou dans la chaîne de blocs ; l'exécution du contrat intelligent est effectué lors de la validation des blocs (les ressources de calcul sont distribuées, ce qui signifie que l'exécution d'un contrat intelligent est sûre en elle-même : le code du contrat intelligent est répliqué en plusieurs nœuds de l'architecture mettant en œuvre la chaîne de blocs ; étant déterministe, les résultats des différentes exécutions doivent être identiques. Par suite, le code ainsi que l'exécution du code sont sûres.

Comme pour tout programme ou code informatique, différents langages de programmation sont disponibles, avec différents modèles de sécurité et de régulation (contrat-cadre régissant d'autres contrats, contrats en cascade, etc). Les formes prises par les contrats intelligents peuvent être diverses (e.g services, agents, *snippets,* scripts, SOA, API, *add-ons,* plug-ins, extensions, *DLC,* etc). La logique mathématique (les prises de décisions opérant sur les données) peut être celle de la logique *classique, floue, combinatoire, intuitionniste, modale,propositionnelle, partielle, para-consistante, etc* ou une combinaison de ces logiques. Le logiciel peut être codé en partie ou en totalité sur forme matérielle (e.g. FPGA). Un contrat intelligent peut être en totalité ou en partie en source ouverte (« *open source"*) et/ou en source fermée (" *closed source* »). Dans le cas de source ouverte, le code est auditable ou vérifiable par les parties ou les tiers. Un contrat intelligent peut combiner des parties en source ouverte (e.g. auditables, vérifiables, améliorables, etc) avec des parties fermées (propriétaires, secrètes, sensibles, etc). Une source fermée peut être un binaire, éventuellement obfusqué ou durci (« *hardened* »). Les techniques cryptographiques peuvent être diverses : symétrique, asymétrique, « *post-quantum », « quantum-safe* », avec utilisation de « *Quantum-Key-Distribution* », etc). Un contrat intelligent peut être lisible par l'homme et/ou la machine ("*human and*/*or machine readable* »)*.*

Des modes de réalisation de l'invention sont décrits ci-après.

Dans un mode de réalisation, il est décrit un procédé mis en œuvre par ordinateur pour le partage de données aéronautiques, comprenant les étapes consistant à maintenir une chaîne de blocs privée, ladite chaîne de blocs privée impliquant une pluralité de parties prédéfinies; à communiquer conditionnellement des données aéronautiques, en réponse à une requête d'une partie parmi les parties prédéfinies, en fonction d'un mécanisme de contrôle des échanges prédéfini (e.g. codé dans la chaîne de blocs, par exemple par un ou des contrats intelligents), les données aéronautiques communiquées étant des données préalablement collectées depuis un ou plusieurs calculateurs aéronautiques embarqués (e.g. des FMS) dans un ou de plusieurs aéronefs des parties prédéfinies.

Dans un mode de réalisation, le mécanisme de contrôle des échanges comprend l'accès et/ou la communication des données de la chaîne de blocs en échange d'une rétribution ou d'une compensation, et le mécanisme de contrôle des échanges étant déterminé par un ou plusieurs contrats intelligents. Une « rétribution » est une somme d'argent versée en échange d'un travail ou d'un service. Une « compensation » désigne une opération par laquelle les achats et les ventes se règlent au moyen de virements réciproques, sans déplacement de titres ni d'argent. Une compensation des contributions (tendant vers leur équilibrage e.g. évaluées sur des plages de temps prédéfinies) peut être effectuée en nature (e.g. envoi de données contre des données) ; il n'est pas nécessairement fait usage de sommes de monnaie fiduciaire. Les contrats intelligents peuvent travailler de concert (e.g. par construction, intentionnellement, avec des mécanismes de contrôle systémique, selon des décisions déterministes, etc), mais parfois aussi être « en concurrence » (e.g. via des offres de services qui sont comparées puis sélectionnées, des « appels d'offres », des décisions probabilistes ou aléatoires, etc).

Dans un mode de réalisation, les données de la chaîne de blocs sont au moins partiellement chiffrées et au moins un contrat intelligent déterminant l'accès aux données, notamment par la gestion de clefs de chiffrement. Selon les modes de réalisation: toutes les données peuvent être en clair ; toutes les données peuvent être chiffrées et/ou masquées ; les données peuvent être partiellement en clair (métadonnées) et chiffrées pour le reste.

Dans un mode de réalisation, le code source du mécanisme de contrôle des échanges et/ou d'un ou de plusieurs des contrats intelligents étant accessible, au moins aux parties prédéfinies. Dans d'autres modes de réalisation, les codes sources sont partiellement fermés (binaires, ou obfusqués i.e. pour décourager ou empêcher l'ingénierie inverse, voire même durcis).

Dans un mode de réalisation, le mécanisme de contrôle des échanges comprenant la détermination d'un montant financier et/ou d'un score de réputation associé avec chacune des parties prédéfinies. Divers mécanismes de gestion de la réputation peuvent être implémentés, notamment par la gestion du « graphe social » entre acteurs. S'il s'avère que les mêmes acteurs partagent leurs données avec toujours les mêmes autres acteurs, la chaine de blocs peut être scindée (« fork »), par exemple automatiquement (le protocole informatique peut préempter des décisions humaines d'organisation), des prix de transfert peuvent être ajustés, etc.

La gestion de la propriété des données peut être partiellement ou entièrement gérée par les contrats intelligents. Des mécanismes DRM (gestion des droits numériques ou « Digital Rights Management ») peuvent gérer les transferts de propriété, des droits de licence, exclusives ou non, etc. Par exemple, une licence exclusive assortie d'un prix à payer plus élevé se traduira par des métadonnées indiquant le fait que les données sont réservées à un usage déterminé et des mécanismes de contrôle (éventuellement assorties de sanctions ou de pénalités) peuvent être implémentés. La gestion de droits exclusifs n'est pas contradictoire avec l'usage d'une chaine de blocs, dans la mesure où les échanges sont transparents et les règles des échanges sont claires et prédéfinies.

Dans un mode de réalisation, la détermination du prix d'un jeu de données étant fixe et prédéfini, ou étant variable et déterminé dynamiquement, par exemple par voie d'enchères, ou par cotation avec carnet d'ordres. D'autres mécanismes financiers peuvent être utilisés (y compris la création de marchés dérivés sur les données ; certains acteurs pressentant la valeur des données d'un certain type peuvent y associer des prises d'options, etc).

Dans un mode de réalisation, les échanges de données étant contrôlés, par exemple capés, par application d'un ou de plusieurs seuils ou plages de seuils, notamment en fonction d'un ratio téléversement/téléchargement de données. Cette approche est quantitative, et peut être modulée par des approches plus qualitatives (où la qualité des données partagées est évaluée *a priori* et/ou *a posteriori,* ce qui peut être le cas si les mécanismes de contrôle en aval sont suffisamment englobant).

Dans un mode de réalisation, un ou plusieurs contrats intelligents implémentent des règles d'échanges suivant des conditions de type FRAND, soit des prix justes, raisonnables et non-discriminatoires. Toutes les règles du droit de la concurrence peuvent généralement être encodées dans les contrats intelligents, par exemple et y compris la détection et la correction d'un abus de position dominante.

Dans un mode de réalisation, le procédé comprend en outre une étape consistant à afficher un ou plusieurs scores associés à une ou plusieurs parties prédéfinies, un score témoignant par exemple d'un excédent ou d'un déficit de téléversement ou de téléchargement de données, ou bien encore du nombre d'utilisations cumulées des jeux de données partagés.

Dans un mode de réalisation, les données aéronautiques partagées sont des données avioniques et/ou des données non avioniques, provenant de sources ouvertes.

Dans un mode de réalisation, les données avioniques comprennent par exemple des paramètres de vol, des données de trajectoire, des données de plan de vol, des données de trafic aérien, des consignes de vol, des données moteur ECM/EMU, des données météorologiques, des données de boîte noire DFRD, des données ATC/AOC/AAC, des données NOTAM et/ou des données du périmètre ACD comprenant des données de calculateurs certifiés FMS, de Pilote Automatique ou PA, des commandes de vol ou FCC, des données des systèmes de localisation ou IRS/GNSS/ADC, des données des systèmes de surveillance ACAS-TCAS, TAWS-GPWS et radar, des données des systèmes de roulage ou AOF, des données systèmes de communication radios RMS/ RMP, des données de communications sans fil compagnie, des données de trafic aérien AOC ou ATC, des données de gestion des systèmes de maintenance, d'alerte, des données de motorisation, des données des systèmes de climatisation, des données gestion des trains d'atterrissage, des données concernant les actionneurs, des données concernant la distribution électrique et/ou hydraulique dans l'aéronef. Les informations ont une intégrité démontrée (via les niveaux de « DAL » de A à D). Elles sont également vérifiées pour utilisation, afin de garantir le niveau de robustesse requis. Ces données sont non exhaustives.

La nature des données implique des caractéristiques techniques en termes de fiabilité. Un système avionique désigne un système fiabilisé (ou à fiabilité garantie). C'est un système dont la défaillance a des conséquences excédant des limites acceptées ou acceptables, donc redoutées. Une défaillance peut se caractériser par la perte de la fonction considérée, ou par la production de données erronées, avec ou sans détection d'une erreur. Selon le niveau de criticité des conséquences redoutées, la probabilité d'occurrence doit être maintenue inférieure à un seuil d'acceptabilité. Ainsi, plus la conséquence est critique, plus la probabilité d'occurrence acceptable est faible. Par exemple, en aéronautique, un événement catastrophique (décès multiples) devra avoir une probabilité d'occurrence inférieure à 10^-9 par heure de vol, alors qu'un incident majeur (réduction des marges de sécurité et des capacités opérationnelles, inconfort ou blessures légères) devra avoir une probabilité d'occurrence inférieure à 10^-5 par heure de vol. Pour assurer ces objectifs, l'architecture du système avionique (fiabilisé) ainsi que la conception de chaque composant garantissent cette probabilité d'occurrence par des garanties de taux de panne de chaque équipement (pannes physiques) et des niveaux de vérification (couverture fonctionnelle et structurelle de test) des logiciels. Ces exigences imposent un effort important de conception et de vérification, et imposent une limitation dans la complexité des traitements mis en œuvre. A l'inverse, la défaillance d'un système non-fiabilisé, ou à la fiabilité non garantie (système « non-avionique ») a des conséquences jugées tolérables, non critiques, ou même sans impact opérationnel significatif. Les exigences sur l'architecture, les composants physiques ou les traitements logiciels sont donc moindres, et autorisent des traitements plus complexes, et un effort de développement et de vérification réduits par rapport à un système fiabilisé. De manière générale, un système avionique est associé avec un taux de panne physique inférieur et une vérification logique supérieure à ceux d'un système de type non avionique.

Dans un mode de réalisation, les données « non avioniques » comprennent des données du périmètre AISD, comme des données issues de sacs de vol électroniques ou EFB, des données issues de systèmes cabine ou IFE, ou des données issues de systèmes au sol.

Dans un mode de réalisation, le procédé comprend en outre une ou plusieurs étapes d'apprentissage automatique conduites sur les données accessibles par l'intermédiaire de la chaîne de blocs et/ou de un ou plusieurs contrats intelligents.

Dans un mode de réalisation, l'apprentissage automatique est non-supervisé. Dans un mode de réalisation, l'apprentissage automatique est appliqué de manière réflexive sur des techniques différentes d'apprentissage automatique, en coopération et/ou mises en concurrence (le système apprend à apprendre et choisit lui-même les techniques les plus efficaces).

Dans un mode de réalisation, un apprentissage automatique comprend un ou plusieurs algorithmes sélectionné parmi les algorithmes comprenant: des machines à vecteur de support ou des séparateurs à vaste marge; des classifieurs; des réseaux de neurones; des arbres de décision et/ou des étapes de méthodes statistiques comme un modèle de mixture gaussienne, une régression logistique, une analyse discriminante linéaire et/ou des algorithmes génétiques.

Dans un mode de réalisation, un contrat intelligent comprend un programme d'ordinateur stocké dans et/ou exécuté par ladite chaine de blocs.

Il est décrit un système pour le partage de données aéronautiques comprenant : une chaine de blocs privée maintenue par une pluralité de parties prédéfinies et préalablement authentifiées; ladite chaine de blocs étant configurée pour l'exécution d'un ou de plusieurs contrats intelligents ; un ou plusieurs calculateurs aéronautiques, par exemple un système de gestion de vol ou FMS, associés directement à la chaîne de blocs en lecture et/ou écriture, et/ ou indirectement à la chaîne de blocs par l'intermédiaire d'un ou de plusieurs contrats intelligents; lesdits un ou plusieurs contrats intelligents étant configurés pour exécuter des mécanismes de compensation en fonction de transactions portant sur des jeux de données échangés entre les parties prédéfinies.

Dans un mode de réalisation, le mécanisme de compensation contrôle des flux financiers et/ou des indicateurs de réputation et/ou les flux de données échangés. Les mécanismes d'ajustement peuvent prévoir des sanctions ou des pénalités diverses (e.g. suspension de compte, éjection, etc) ; a contrario des « récompenses » ou des bonus ou des gratifications ou des crédits ou des points peuvent être alloués. Des annotations humaines peuvent noter les jeux de données, poser des questions, demander des données complémentaires, etc (le tout étant traçable).

Dans un mode de réalisation, le système comprend en outre en outre une base de données centralisée et/ou une chaîne de blocs dite secondaire comprenant les données aéronautiques, lesdites données étant référencées ou indexées dans la chaîne de bloc privée dite principale. Plus généralement, N chaines de blocs peuvent coexister, de manière indépendante, ou parfois interdépendantes i.e. reliées les unes aux autres.

Dans un mode de réalisation, le système comprend en outre : un ou plusieurs réseaux de neurones, choisis parmi les réseaux de neurones comprenant : un réseau de neurones artificiels ; un réseau de neurones artificiels acyclique ; un réseau de neurones récurrents ; un réseau de neurones à propagation avant ; un réseau neuronal convolutif ; et/ou un réseau de neurones antagonistes génératifs ; lesdits un ou plusieurs réseaux de neurones étant émulés de manière logicielle par une chaine de blocs, principale ou secondaire, et/ou par un ou plusieurs contrats intelligents ; et/ou étant des circuits physiques dont les entrées et les sorties sont contrôlables par lesdites chaînes de blocs et/ou par un ou plusieurs contrats intelligents. D'autres types de matériel (« *hardware* ») peuvent être utilisés (« *A.I. accelerators », « A.I. chip* », e.g. réseaux adaptatifs, régénératifs, etc.

Dans un mode de réalisation, le chiffrement est obtenu par cryptographie post-quantique. Ce type de chiffrement permet de résister à des attaques quantiques, le cas échéant. De fait les données chiffrées aujourd'hui ne pourront pas être décryptées même dans le cas de l'avènement d'ordinateurs quantiques suffisamment puissants. Les données aéronautiques sont des données sensibles (e.g. logs de sécurité) et par suite, il peut être avantageux de recourir à ce type de cryptographie. De la cryptographie homomorphe peut être utilisée (calcul e.g. apprentissage sur des données chiffrées).

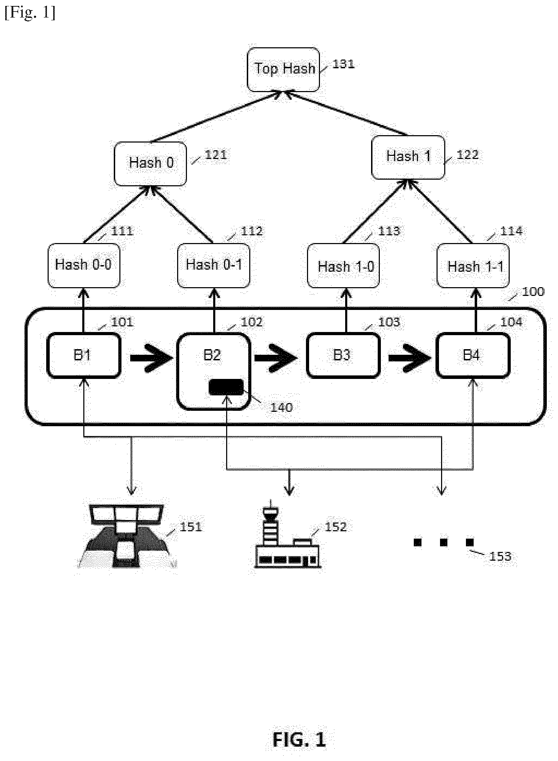

La figure 1 illustre un exemple d'architecture distribuée selon l'invention.

La figure 1 montre 4 blocs de données B1 à B4 (101, 102, 103, 104). L'arbre de hachage est constitué par un ensemble de valeurs de hash interdépendantes. Les feuilles de l'arbre sont les valeurs de hash de chacun des blocs de données initiales (111, 112, 113, 114). Dans un arbre de Merkle (binaire), ces valeurs de hachage sont alors concaténés deux à deux pour pouvoir calculer un nouveau hash parent (121, 122). Ainsi de suite jusqu'au sommet de l'arbre ou on obtient un hash-sommet (131). Pour garantir l'intégrité d'un bloc par rapport à l'ensemble des données, il suffit de posséder les valeurs de hash des frères, les valeurs de hash des oncles et le hash-sommet. De plus, seul le hash-sommet (131) doit être récupéré de manière sure pour garantir l'intégrité de l'ensemble des données représenté par l'arbre. Par exemple, si on veut vérifier l'intégrité du block B2, il suffit d'avoir récupéré le hash 0-0 (son frère 111), le hash1 (son oncle 122) et le hash-sommet (131).

Un bloc de données peut comprendre un ou plusieurs codes ou programmes ou contrats intelligents 140.

Concrètement, un contrat intelligent 140 peut mettre un œuvre un ou plusieurs mécanismes : (a) d'accès aux données ou parties de données : -i) gestion des droits d'accès et partages des clefs de chiffrement (dans le cas d'un chiffrement asymétrique la clef privée est secrète et connue du seul utilisateur ou la clef publique peut être connue d'un registre) ; des mécanismes de chiffrement matériel peuvent être utilisés (TPM ou HSM, carte à puce, etc) ; ii) abonnement par unité de temps (journalier, hebdomadaire, mensuel, annuel, etc) et/ou par volume de données (e.g. au Mo octets de données téléchargées) ; des systèmes de crédits ou de points peuvent être utilisés ; b) de paiement ; les transactions peuvent être réglées en unité de compte (crypto-monnaie ou monnaie fiduciaire e.g. USD ou EUR) ;

Les blocs de données (101, 102, 103, 104) sont produits puis consommés, i.e. accédés, en lecture et/ou écriture, par des parties ou entreprises (e.g. illustrées par 151, 152, 153).

Une partie ou entreprise ou consommateur peut être le constructeur de l'avion, un assembleur, un équipementier, un client ou une compagnie aérienne, une société de maintenance, une autorité de régulation, etc.

Une partie peut être « producteur » de données *et*/*ou* « consommateur » de données. Un consommateur de données peut être dénommé « client » ou « demandeur » ou « receveur » ou « acheteur » par la suite. Un producteur peut être dénommé « émetteur » ou « serveur » ou « fournisseur » ou « vendeur » par la suite. L'expression « et/ou » souligne le fait que la production et la consommation peuvent être successives ou alternatives, ou même simultanées. Comme chaque partie peut acheter et//ou vendre, prendre licence et/ou concéder licence, céder ou donner ou partager des données qui lui sont propres, elle peut aussi accéder aux données partagées par les autres parties. La mise en partage des données permet de créer d'autres données, dont certaines peuvent avoir de la valeur marchande ou technique ou autre.

Par exemple, les calculateurs embarqués 151 dans un aéronef consomment et produisent une quantité de données extrêmement importante. La plupart des échanges restent *internes* à l'aéronef, et servent au fonctionnement global de l'aéronef. Certaines données peuvent devenir *externes,* i.e. être extraites et stockées ou transmises en ligne, pour diverses applications :
- *« DFDR* - *Digital Flight Data Recorder* » : désigne la boîte noire de l'appareil. Des données issues de plusieurs calculateurs y sont agrégées pour reconstituer un historique d'incident ou d'accident. Les utilisateurs de ces données sont des autorités en général étatiques de suivi des incidents/accidents (en France le « BEA » - Bureau Enquête Accidents ». La fourniture de données pour nourrir le DFDR résulte d'une obligation légale. Le jeu de données est très réduit pour des questions de stockage.
- *« ECM - Engine Condition Monitoring* » : les moteurs de l'aéronef sont très complexes, nécessitent des réglages très fins pour les optimiser, et une surveillance particulière pour pronostiquer les anomalies (maintenance prédictive). Pour ces raisons, les fournisseurs de moteurs (« motoristes ») installent soit des « *EMU -Engine Monitoring Unit* » pour concentrer et stocker des informations sur les moteurs, et éventuellement les transmettre au sol par liaison de données numérique, afin de les analyser. Ces données peuvent rapidement dépasser le Go (Giga Octet) par vol. Ces données ne sont pas transmises à des tiers et servent au motoriste ou aux équipes de maintenance.
- « AOC - ATC Datalink » : des données opérationnelles peuvent être envoyées par les calculateurs de communication numérique de l'aéronef (« *CMU - Communication Management Unit* ») à destination des compagnies aériennes (*AOC - Airline Operation Communication ; AAC* - *Airline Administrative Communication*) ou à destination des autorités de contrôle du ciel aérien (*ATC -Air Traffic Control*). Ces données sont limitées en quantité, concernent la position de l'aéronef, sa trajectoire, mais aussi des conditions environnementales issues de capteurs embarqués. La liste des données est formalisée dans des normes internationales (AEEC ARINC702 par exemple pour les données AOC, RTCA DO212/219 pour des données ATC). La fourniture de données résulte soit d'un cadre légal (ATC) ou contractuel entre la compagnie d'une part et le fournisseur de CMU ou le constructeur d'autre part.

Ces données, ainsi que quelques autres, représentent pourtant une toute petite partie des données brutes générées par les calculateurs embarqués. D'autres données, internes ou externes peuvent être partagées.

Comme autre exemple de producteur/consommateur de données, les autorités de contrôle du trafic aérien 152 figurent en bonne place. Les données peuvent concerner des notifications NOTAM, des alertes diverses, des statistiques de routage ou sur les plans de vol etc.

Enfin, une grande diversité de parties 153 peuvent consommer ou produire des données utiles : météorologiques, des services d'analyse (« analytics »), etc.

L'illustration permet d'appréhender les différentes couches ou niveaux intervenant dans les procédés ou systèmes selon l'invention :
- une première couche de méta-données ou chaîne de blocs 100 ; héritant des propriétés inhérentes à une chaîne de blocs (e.g. intégrité, in-falsifiabilité, etc) ; la chaîne de blocs 100 est essentielle, les autres niveaux sont optionnels.
- une deuxième couche de données 210 appelées ou référencées par la chaîne de blocs 100 (chiffrée en partie ou en totalité) ; ces données peuvent aussi comprendre des métriques de téléversement, de téléchargement, d'utilisations, etc lesquelles peuvent déterminer des scores ou autres quantifications (au moyen de circuits de décision logiques e.g. des ordinateurs) ;
- une troisième couche de coordination ou de régulation entre acteurs (qui jouent tour à tour des rôles de producteur P 201 ou de consommateur C 202, lisant et/ou écrivant sur la chaîne de blocs 100. Les accords entre participants à la chaîne de blocs peuvent être des contrats écrits (hors technique), ou bien partiellement - ou en totalité - transcrits via des contrats intelligents de type 140 ;
- une quatrième couche 220 optionnelle peut réguler les contrats intelligents (contrats liés, contrats indépendants, contrat cadre modifiant d'autres contrats en aval, ou à l'inverse en amont, boucles de rétroaction multiples entre contrats, feedforward, etc). Optionnellement, ce bloc 220 peut représenter un ou plusieurs validateurs (ou « oracles », lesquels peuvent correspondre à une validation indépendante humaine et/ ou machine i.e. encodée algorithmiquement).

Un grand nombre de modes de réalisation de l'invention sont possibles. Quelques exemples sont décrits ci-après, étant entendu que des variations minimes devraient être replacées dans la portée de protection recherchée.

### Chaînes publiques ou privées

Dans un mode de réalisation, la chaîne de blocs 100 de données aéronautique est publique. Dans un mode de réalisation, la chaîne de blocs de données aéronautique est privée : chaque participant est préalablement agréé (par contrat ou accord 201-202) et dispose techniquement de clefs ou moyens d'authentification.

### Chaînes de blocs secondaires ou dérivées

Additionnement ou en substitution, une ou plusieurs chaînes de blocs secondaires (non représentées) peuvent être utilisées. Par exemple, une chaîne de blocs principale peut contenir les métadonnées relatives aux données aéronautiques (i.e. y compris les valeurs de hachage des données), tandis qu'une chaîne secondaire peut contenir les données elles-mêmes.

### Encodage algorithmique des échanges

Pour encadrer une concurrence libre et non faussée, des limites ou autres garde-fous peuvent être encodés de manière algorithmique. Par exemple, s'il s'avère qu'il n'existe qu'un seul fournisseur pour une catégorie de données (e.g. consommation de carburant), alors des mécanismes d'ajustement automatiques des prix ou tarifs peuvent être imposés par les contrats intelligents : des prix « raisonnables » peuvent être appliqués, sans condition d'accès (non-discrimination). Des entités de notation indépendantes (« oracles ») agréées par les participants à la chaîne de blocs peuvent contribuer aux scores et/ou aux modes de régulation des transactions.

Divers mécanismes de rétribution (ou de compensation ou de rémunération) peuvent être mis en œuvre. Différents modèles d'incitation peuvent être mis en œuvre. Dans certains cas, les mécanismes peuvent être statiques et prédéfinis. Dans d'autres, cas ces mécanismes peuvent être dynamiques. Dans certains modes de réalisation, les mécanismes peuvent tendre vers une égalité de traitement entre les acteurs participants (a priori) ou des rétributions « justes » (constatées et/ou adaptées a posteriori).

### Régulation des échanges

Les échanges peuvent être régulés de manière algorithmique i.e. de manière claire, impartiale et prédéfinie, e.g. détermination et manipulation des scores des participants à la chaîne de blocs.

Dans un mode de réalisation, chaque participant est associé à un ou plusieurs scores, lesquels peuvent évoluer dans le temps (e.g. mises à jour régulières, après chaque transaction, etc). Dans un mode de réalisation, les scores d'une partie sont résumées en un score synthétique (« rang A », « rang AA », etc) peut être un agrégateur synthétique d'une pluralité de critères (comprenant la quantification de la qualité des données envoyées mesurées par exemple par leur nombre d'utilisation par les pairs, les sommes engagées dépensées ou reçues, etc).

Dans un mode de réalisation, un nœud ou participant à la chaîne de blocs est associé à un score synthétique VS (acronyme de *Value Score*), lequel gouverne les accès aux échanges (en tant que producteur et/ou de consommateur de données).

Dans un mode de réalisation, ce score VS peut être fonction de i) la « valeur » des informations qu'il produit VS_PROD et ii) de la « valeur » des informations qu'il consomme VS_CONS. La valeur VS peut s'exprimer sous forme d'un score (chiffré), d'un symbole, de valeur dans une crypto-monnaie, d'une monnaie réelle (fiduciaire), etc.

Le terme « valeur » désigne une quantification effectuée selon des critères prédéfinis, cette quantification visant à interpréter l'utilité absolue et/ou relative des données partagées par le participant. L'utilité peut en effet être absolue (certaines données de performances peuvent être rares, ou au contraire publiques et d'utilité nulle e.g. masse à vide de l'avion), mais également relative (des données de changement de niveaux de plan de vol en fonction des centres ATC et de consommations de carburant peuvent aider significativement des procédés d'apprentissage automatique en multipliant les enveloppes de trajectoires, etc). La quantification extrinsèque de la valeur relative peut être difficile voire impossible à établir (dépendante du contexte d'utilisation non maitrisé et extérieur à l'objet de l'invention), néanmoins tout effort de quantification peut ne pas être vain et des estimations plancher peuvent être établies, notamment du fait de la structuration en place de marché (la valeur du cours d'un type de données peut refléter son utilité en aval).

Dans un mode de réalisation, un client ou consommateur achète pour un montant VS_MONEY de droit de consommer (e.g. crédits) pour pouvoir ultérieurement consommer des données (ce qui peut être utile s'il en consomme plus qu'il n'en produit). Une autre partie à la chaîne de blocs peut transformer sa VS (Value Score) en monnaie réelle (ou en crypto-monnaie), e.g. pour d'autres usages hors invention. Sa VS est alors diminuée du montant VS_MONEY. Le score VS d'une partie à la chaîne de blocs est donc amené à évoluer en fonction de l'attractivité des données que cette partie produit et partage. Différentes méthodes de quantification, éventuellement considérées en combinaison, sont possibles. Les critères peuvent comprendre un ou plusieurs des éléments comprenant: le nombre d'abonnés, le nombre de téléchargement et/ou de téléversement des paquets de données (« *datasets* »), des résultats de votes ou de notes attribuées par un ou plusieurs consommateurs, le volume en giga-octets de données partagées, etc.

Les valeurs VS_PROD (valeur des données produites) et VS_CONS (valeur des données consommées) peuvent être calculées de diverses manières, notamment en quantité (volume de données) et/ou en qualité (e.g. criticité du calculateur ou de la fonction embarquée), en valeur relative résultat d'une confrontation offre/demande (e.g. cotation, carnet d'ordres consensus sur un prix, proposition, contre-offre, acceptation, refus, négociation, etc), prise en compte de l'historique d'utilisation, du cours à un instant donné en fonction de paramètres prédéfinis, de la prise en compte de prix minimum et maximum, tels que déterminés par exemple par un circuit de décision logique émulant des conditions d'accès FRAND (juste, raisonnable et non-discriminatoire), etc. Les valeurs ou modalités de calcul peuvent être inscrites ou déterminées par un contrat intelligent, lequel peut être bipartite (accord entre deux acteurs) ou multipartite (accord entre N fournisseurs et M consommateurs).

Dans un mode de réalisation, la chaîne de blocs peut déterminer (par exemple en temps réel) le score d'une partie participant à la chaîne de blocs. Ce score étant inscrit dans la chaîne de blocs hérite de ses propriétés (valeur non falsifiable, historique certain).

Dans d'autres modes de réalisation, divers services d'analyse ou de méta-analyse peuvent être déterminés : historique et palmarès des contributeurs, calcul de risques d'injection de données fausses (i.e. simplement erronées) ou malicieuses (intentionnellement fausses pour affaiblir ou fausser les apprentissages automatiques réalisés par les tiers, etc). La chaîne de blocs étant transparente quant au moins à certaines données (méta-données descriptives, historiques des transactions, etc), une partie éventuellement malicieuse sera rapidement déterminée comme telle et éjectée du noyau de confiance entre parties authentifiées. A contrario, la transparence du système dont la gouvernance est au moins en partie auditable encourage les parties prenantes à abandonner une certaine souveraineté sur les données, en contrepartie d'accès à des données tierces et/ou de compensation financière.

Quand un producteur publie un ou plusieurs jeux de données dans une base 210, en publiant les valeurs de hachage correspondants dans la chaîne de blocs 100, les métadonnées correspondantes sont ajoutées dans un bloc, lequel est horodaté. Le bloc permet l'identification de la source (authentification réussie) et apporte une garantie quant à l'intégrité des données déposées (valeurs de hachage). Quand un consommateur récupère un jeu de données depuis la base 210 associée à la chaîne de blocs, le score du producteur est réévalué (e.g. ajout de la somme déterminée si le bloc est validé, retrait de la somme si le jeu de données est corrompu ou faux ou vide ou autrement non valide) ainsi que son propre score (d'une valeur par exemple inverse de celle créditée au producteur, mais diverses pondérations peuvent être appliquées). Cette transaction comprenant ces écritures crédit/débit, données d'identification, etc sont écrites dans la chaîne de blocs. De cette manière, les parties apparaissent soient en excédent soit en déficit de fourniture de données. Il se peut que des situations de déficits permanents ou intermittents soient acceptables (e.g. compensables par des flux financiers) : l'essentiel est que les arbitrages soient transparents et sûrs, i.e. traçables et non-falsifiables.

### Modes de réalisation avec contrats intelligents

Dans un mode de réalisation, le module de partage collaboratif peut s'appuyer sur un ou plusieurs « contrats intelligents », le contrat permettant par exemple d'assurer l'égalité de traitement (en valeur) entre les parties prenantes. Les données sont partagées sur une chaîne de blocs afin d'en assurer l'horodatage et l'immuabilité.

Dans un mode de réalisation, toutes les données des blocs sont écrites en clair (e.g. les droits d'accès sont protégés). Dans un mode de réalisation, une partie des données sont écrites en clair (certaines informations sont lisibles par tout le monde, d'autres informations à plus haute valeur ajoutée sont protégées par exemple par chiffrement). Dans un mode de réalisation, les données des blocs sont chiffrées (e.g. symétrique, asymétrique, etc). Dans certains cas les données des blocs sont masquées en plus d'être chiffrées (l'existence des données est cachée, ce qui fournit une protection supplémentaire).

Dans un mode de réalisation, les données sont stockées dans une ou plusieurs bases de données partagées, chiffrées en tout ou partie, après vérification de leur intégrité et de l'authenticité du producteur.

Dans un mode de réalisation, la validation des données produites est effectuée par consensus distribué (e.g. utilisation validée avec un score de « pertinence » par plusieurs consommateurs, mesure et suivi du taux d'utilisation, etc) et/ou par validation d'un pair participant à la chaîne de blocs reconnu comme fiable dans la chaîne (qualification technique ou de nature administrative).

Dans un mode de réalisation, quelques informations (comme le format et/ou le résumé du contenu du bloc chiffré sont laissées en clair dans un espace de stockage (dans la chaîne ou en dehors de la chaîne), afin qu'un consommateur intéressé puisse savoir si le bloc l'intéresse ou non.

Dans un mode de réalisation, l'utilisation que souhaite faire un consommateur des données d'un bloc est gouvernée (directement ou indirectement via des règles) par un contrat intelligent. En d'autres termes, un contrat intelligent peut comprendre un ou plusieurs mécanismes DRM (*Digital Rights Management*) qui peuvent régir la manipulation des données (e.g. droits de lecture, d'écriture, de copie, de publication, etc).

Dans un mode de réalisation, un contrat intelligent peut lire des données de blocs en clair et déclencher une ou plusieurs opérations, par exemple si le client ou demandeur ou consommateur est valablement abonné au type de données du bloc considéré ou si des conditions prédéfinies sont satisfaites.

Dans certains modes de réalisation, les droits sur les données de blocs peuvent être conditionnels à des critères de contribution (notamment de ratio téléversement/téléchargement en anglais « *upload*/*download » ou « seed*/*leech* »).

Dans un mode de réalisation, l'accès aux données ou les droits sur ces données peuvent être régis de manière conditionnelle (par exemple si le solde du client ou Value Score est positif).

Le cas échéant, si l'accès conditionnel est accordé (ou si les conditions prédéfinies sont satisfaites), le contrat intelligent exécuté peut émettre une transaction ou demande de récupération des données, laquelle transaction s'insérera (parmi plusieurs autres) dans un nouveau bloc. Si le consensus distribué confirme le bloc comprenant la transaction, une clef de chiffrement permettant la lecture des données souhaitée peut être envoyée au client ; qui pourra lire et exploiter les données désirées.

### Exemple de mise en œuvre d'un contrat intelligent

Dans un mode de réalisation, un fournisseur remplit une base de données avec de nouvelles données. Un contrat intelligent de « mise à disposition » détecte les nouvelles données et stocke des méta-données dans une chaîne de blocs (e.g. identification, date, émetteur, score, hash du contenu des données, etc). Les données sont mises en vente ou mises à disposition gratuitement (mécanismes de mise aux enchères, premier venu-premier servi, mécanisme DRM de licence spécifiant le nombre d'utilisations, etc). Le prix de la chose peut être déterminé, selon des mécanismes variés (e.g. calcul de valeur intrinsèque aux données par exemple selon un ou plusieurs modèles préétablis, calcul de la valeur par la création d'un marché, e.g. cotation et carnet d'ordre, enchères, enchères inversées, etc). Si un accord sur la chose et sur le prix est trouvé entre la chaîne de blocs (via un contrat intelligent) et un client, alors une transaction peut être effectuée (données contre donnée ; données contre paiement en monnaie e.g. fiduciaire, privée, unités de compte, crédits internes à la chaîne de blocs). Un contrat intelligent de « consommation » peut alors se déclencher, par exemple vérifier diverses conditions ou critères (e.g. éligibilité, score de l'acheteur, réputation quantifiée, droits d'accès, solde, etc). Un contrat intelligent de « mise à disposition » des données peut alors se déclencher et communiquer les données achetées ou mises en licence au client. Par exemple, les informations d'un ou de plusieurs blocs de données (e.g. adresses, clef de déchiffrement, valeurs de hachage des contenus des données, etc). Le client, une fois en possession des données désirées peut les exploiter (par exemple techniquement, e.g. pour améliorer des statistiques, enrichir ou alimenter des systèmes d'apprentissage automatique). Les usages des données peuvent, outre les mesures techniques de protection, être encadrés juridiquement (par contrat) ; par exemple, le client peut avoir l'obligation contractuelle de détruire les copies des données dont il dispose après l'expiration d'une certaine date ; il peut lui être interdit par contrat de diffuser les données accédées, etc).

Dans une variante de réalisation, une pluralité de fournisseurs partagent des données et stockent les valeurs de hash des données, ainsi que des informations relatives au format des données, dans une ou plusieurs chaînes de blocs. Après réalisation d'une transaction, un ou plusieurs contrats intelligents vérifient le « score » de valeur de l'acheteur, lui indique la position des données dans la base de données partagée, ainsi que les clefs de déchiffrement des données.

Dans une variante de réalisation, un ou plusieurs contrats utilisent des mécanismes de compte séquestre ou dépôt fiduciaire, etc (en anglais « escrow payment » etc). En particulier les données peuvent être chiffrées à nouveau, etc.

### Mode de réalisation direct, sans contrats intelligents

Dans une variante de réalisation, les producteurs et ou consommateurs peuvent se passer de contrats intelligents, par lecture et/ou écriture (directe) dans la chaîne de blocs. Par exemple, un producteur peut recevoir un ordre d'achat de la part d'un consommateur et si la transaction aboutit peut communiquer directement au consommateur. De ce fait la chaîne de blocs ne contient pas les données en elles-mêmes mais seulement la description des données. Ce mode de réalisation est avantageux en ce que les données répliquées dans la chaîne de blocs sont significativement moins volumineuses.

D'autres modes de réalisation sont décrits ci-après.

### Abonnement(s)

Dans un mode de réalisation, un aéronef peut, par exemple tour à tour, publier de l'information à destination des autres membres du réseau ou bien « s'abonner » (en anglais « *subscribe* ») au réseau, par exemple via un contrat intelligent, et recevoir les informations le concernant de manière automatique. Par exemple, un avion peut partager ses informations météorologiques (par exemple non réglementaire, ou les conditions traversées localement), de manière sûre et intègre, avec d'autres aéronefs (appartenant à d'autres compagnies aériennes, précisément). Les modes d'abonnement peuvent comprendre des modes push et/ou pull, de désinscription, etc/

### Confidentialité différentielle

La confidentialité différentielle désigne une propriété d'anonymisation pouvant être atteinte via différents mécanismes. Différents mécanismes permettent de réduire les risques d'identification d'une partie ou d'une donnée confidentielle, si possible en maximisant la pertinence des résultats d'une requête donnée. Ces mécanismes comprennent la *k-anonymity, t-closeness, l-diversity ou les* échanges à divulgation nulle de connaissance. Cette dernière expression désigne un protocole sécurisé dans lequel une entité nommée *« fournisseur de preuve* », prouve mathématiquement à une autre entité qu'une proposition est vraie sans toutefois révéler d'autres informations que la véracité de la proposition. Dans certains modes de réalisation, des mécanismes de partage sans connaissance peuvent être mis en œuvre (« *zero-knowledge* »). Une flotte d'avion d'une compagnie A peut ainsi communiquer des logs de sécurité (e.g. tentatives d'attaques cyber), avec d'autres vols ou d'autres compagnies aériennes, sans que des informations critiques puissent être dévoilées à un attaquant qui accèderait aux données (e.g. au-delà de la protection par chiffrement, obsolescence, intervalles de validité, niveaux de criticité ; etc)

### Modes de réalisation avec validation externe

Dans un mode de réalisation, un intermédiaire est ajouté : un validateur de données (non représenté). Dans une première étape, de production, une source décide de publier des données dans la chaîne de blocs (directement ou indirectement via la base 210). Les données sont envoyés avec un identifiant (qui permet d'identifier la source d'envoi des données) et un résumé du contenu (e.g. paramètres, unités, quantité, format, etc) ainsi que la date des données (e.g. création, validité, etc) Cet ensemble forme un « bloc » à valider. Le sous-système de validation reçoit les données. La validation est effectuée soit consensus ou par un « validateur» externe et « de confiance » : d'autres fournisseurs ou utilisateurs vérifient l'intégrité des données (et en option l'authenticité de l'émetteur). Ceci peut donner lieu à rétribution (en VS) pour le ou les nœuds ayant participé à la validation. Ce peut être le consommateur qui vérifie l'intégrité du bloc (hash). Dans un mode de réalisation, le consommateur peut « noter » (unilatéralement) l'attractivité du bloc reçu (son intérêt estimé pour et par lui-même). Dans un mode de réalisation, la note est donnée par le consommateur. Dans un mode de réalisation, la note est calculée par comptage du nombre de téléchargements du jeu de données considéré et/ou par le nombre de consommateurs intéressés ou acheteurs/licenciés effectifs. Si les données sont déclarées comme étant invalides alors la chaîne de blocs est mise à jour avec une baisse du VS_PROD d'un certain montant pour le producteur, et une augmentation du VS_PROD pour celui qui a détecté l'anomalie. Dans un mode de réalisation, si les données sont considérées comme valides/intègres alors un nouveau bloc est créé, qui contiendra le lien vers les données (e.g. adresses, clefs), et une augmentation de VS_PROD d'un certain montant pour le nœud ou la partie de validation.

### Modes de réalisation avec validation interne

Dans certains modes de réalisation, le tiers validateur est internalisé : les vérifications sont effectuées directement et automatiquement par un ou plusieurs contrats intelligents. A chaque nouvelle entrée dans la base (et tentative d'écriture de bloc), un ou plusieurs contrats intelligents peuvent exécuter diverses tâches, notamment a) vérifier si le producteur est déclaré (s'il s'agit d'une partie au consortium ou chaîne de blocs) ; b) modifier le score VS de la source c) noter ou évaluer les données entrées (directement ou indirectement) ; éventuellement d) effectuer directement des vérifications fonctionnelles sur les données (par exemple, des données issues d'un aéronef de modèle X peuvent être corrélées/croisées avec d'autres sources d'informations sur l'aéronef (e.g. sources publiques ou privées de la compagnie, du contrôle aérien) émises en temps réel et correspondant à l'état de l'aéronef (e.g. heure de décollage, statut courant e.g. en vol, au sol, en croisière, position courante ...).

Dans la perspective de la consommation de données, un consommateur s'abonne ou se déclare intéressé pour récupérer des données (e.g. ordre d'achat directement sur la chaîne de blocs ou via un ou un contrat intelligent). Le contrat intelligent concerné peut vérifier si l'acheteur a le solde suffisant (VS) pour télécharger les données. Dans une variante de réalisation, le bloc acheté est mis à disposition d'un ou de plusieurs validateurs humains et/ou machines qui effectuent cette vérification. Si la transaction est valide, le jeu de données (par exemple chiffré) est transmis à l'acheteur, qui peut par exemple avoir la possibilité de vérifier son intégrité (valeur de hash récupérée dans la chaîne de blocs). Si le jeu de données est déterminé ou réputé valide, des clefs de déchiffrement (stockées dans la chaîne de blocs) sont récupérées par le contrat intelligent et transmises à l'acheteur. La transaction est ensuite inscrite dans la chaîne de blocs par le contrat intelligent. Dans un mode de réalisation, des mécanismes de compensation et/ou d'évaluation et/ou de rétribution et/ou de validation peut être mis en œuvre si les données sont déterminées comme étant valides (mécanisme de notation et/ou de réputation pour identifier ou rétribuer les émetteurs de données les plus « utiles » (notion relative à une ou plusieurs objectifs pouvant être objectivés et internalisés). Le consommateur demandeur i.e. initiateur de la transaction peut par exemple importer les données obtenues et les croiser ou intégrer à des données existantes dans le but d'effectuer un traitement de type « Big Data » par des techniques d'Intelligence artificielles (notamment d'apprentissage automatique).

En matière aéronautique, le consommateur peut par exemple utiliser les heures d'arrivées prédites sur les points de passage, et les heures de passage réelles issues du calculateur ou système de gestion de vol FMS, pour un jeu d'avions qui parcourent une ligne qu'il fréquente, afin d'en tirer des corrélations sur l'heure d'arrivée à l'aéroport en fonction d'évènements qu'il récupère également via ce mécanisme de partage de données via une chaîne de blocs (e.g. météorologie des calculateurs de type *Air Data Unit,* consignes ATC du calculateur CMU, trajectoire réellement suivie par l'aéronef issue des calculateurs GPS, Pilote automatique, informations de densité de trafic issue des calculateurs TCAS, etc).

### Mise en œuvre logicielle et/ou matérielle

Matériellement, les modes de réalisation de l'invention peuvent être réalisés par ordinateur. Par exemple, une architecture distribuée du type « informatique dans les nuages » (« cloud computing » en anglais). Des serveurs en pair-à-pair, entièrement ou partiellement distribués (existences de centres) peuvent interagir. Une chaîne de blocs repose sur une architecture décentralisée, qui peut être plus ou moins distribuée. Une mise en œuvre par chaîne de blocs ne fait pas obstacle à l'existence d'une ou de plusieurs nœuds privilégiés, quand il s'agit de cloud privé ou de chaîne de blocs privée. Les accès peuvent être multiplateformes (e.g. depuis EFB, WebApp, accès sol, etc). Un ou plusieurs EFB peuvent être en interaction avec un ou plusieurs FMS.

Dans un mode de réalisation, un aéronef est équipé d'un module de communication et de partage collaboratif de données issues des calculateurs embarqués dans l'aéronef. Ce module matériel est en relation avec divers utilisateurs et/ou fournisseurs de données. Dans un mode de réalisation, le procédé est mis en œuvre par ordinateur. L'ordinateur peut être un rack ou une tablette ou un EFB ou une partie logicielle intégrée dans le FMS, etc.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, ou électromagnétique.]

## Revendications

1. Procédé mis en œuvre par ordinateur pour le partage de données aéronautiques, comprenant les étapes consistant à :
- maintenir une chaîne de blocs privée, ladite chaîne de blocs privée impliquant une pluralité de parties prédéfinies;
- communiquer conditionnellement des données aéronautiques, en réponse à une requête d'une partie parmi les parties prédéfinies, en fonction d'un mécanisme de contrôle des échanges prédéfini, les données aéronautiques communiquées étant des données préalablement collectées depuis un ou plusieurs calculateurs aéronautiques embarqués dans un ou de plusieurs aéronefs des parties prédéfinies.

2. Procédé selon la revendication 1, le mécanisme de contrôle des échanges, comprenant l'accès et/ou la communication des données de la chaîne de blocs en échange d'une rétribution ou d'une compensation, et le mécanisme de contrôle des échanges étant déterminé par un ou plusieurs contrats intelligents.

3. Procédé selon la revendication 2, les données de la chaîne de blocs étant au moins partiellement chiffrées et au moins un contrat intelligent déterminant l'accès aux données, notamment par la gestion de clefs de chiffrement.

4. Procédé selon l'une quelconque des revendications précédentes, le code source du mécanisme de contrôle des échanges et/ou d'un ou de plusieurs des contrats intelligents étant accessible, au moins aux parties prédéfinies.

5. Procédé selon l'une quelconque des revendications précédentes, le mécanisme de contrôle des échanges comprenant la détermination d'un montant financier et/ou d'un score de réputation associé avec chacune des parties prédéfinies.

6. Procédé selon la revendication 5, la détermination du prix d'un jeu de données étant fixe et prédéfini, ou étant variable et déterminé dynamiquement, par exemple par voie d'enchères, ou par cotation avec carnet d'ordres.

7. Procédé selon l'une quelconque des revendications précédentes, les échanges de données étant contrôlés, par exemple capés, par application d'un ou de plusieurs seuils ou plages de seuils, notamment en fonction d'un ratio téléversement/téléchargement de données.

8. Procédé selon l'une quelconque des revendications précédentes, un ou plusieurs contrats intelligents implémentant des règles d'échanges suivant des conditions de type FRAND, soit des prix justes, raisonnables et non-discriminatoires.

9. Procédé selon l'une quelconque des revendications précédentes, comprenant en outre une étape consistant à afficher un ou plusieurs scores associés à une ou plusieurs parties prédéfinies, un score témoignant par exemple d'un excédent ou d'un déficit de téléversement ou de téléchargement de données, ou bien encore du nombre d'utilisations cumulées des jeux de données partagés.

10. Procédé selon l'une quelconque des revendications précédentes, les données aéronautiques partagées étant des données avioniques et/ou des données non avioniques, provenant de sources ouvertes.

11. Procédé selon la revendication 10, les données avioniques comprenant par exemple des paramètres de vol, des données de trajectoire, des données de plan de vol, des données de trafic aérien, des consignes de vol, des données moteur ECM/EMU, des données météorologiques, des données de boîte noire DFRD, des données ATC/AOC/AAC, des données NOTAM et/ou des données du périmètre ACD comprenant des données de calculateurs certifiés FMS, de Pilote Automatique ou PA, des commandes de vol ou FCC, des données des systèmes de localisation ou IRS/GNSS/ADC, des données des systèmes de surveillance ACAS-TCAS, TAWS-GPWS et radar, des données des systèmes de roulage ou AOF, des données systèmes de communication radios RMS/ RMP, des données de communications sans fil compagnie, des données de trafic aérien AOC ou ATC, des données de gestion des systèmes de maintenance, d'alerte, des données de motorisation, des données des systèmes de climatisation, des données gestion des trains d'atterrissage, des données concernant les actionneurs, des données concernant la distribution électrique et/ou hydraulique dans l'aéronef.

12. Procédé selon la revendication 11, les données non avioniques comprenant des données du périmètre AISD, comme des données issues de sacs de vol électroniques ou EFB, des données issues de systèmes cabine ou IFE, des données issues de systèmes au sol.

13. Procédé selon l'une quelconque des revendications précédentes, comprenant en outre une ou plusieurs étapes d'apprentissage automatique conduites sur les données accessibles par l'intermédiaire de la chaîne de blocs et/ou de un ou plusieurs contrats intelligents.

14. Procédé selon la revendication 13, l'apprentissage automatique étant non-supervisé, ou étant appliqué de manière réflexive sur des techniques différentes d'apprentissage automatique en coopération et/ou mises en concurrence.

15. Procédé selon la revendication 13, un apprentissage automatique comprenant un ou plusieurs algorithmes sélectionné parmi les algorithmes comprenant: des machines à vecteur de support ou des séparateurs à vaste marge; des classifieurs; des réseaux de neurones; des arbres de décision et/ou des étapes de méthodes statistiques comme un modèle de mixture gaussienne, une régression logistique, une analyse discriminante linéaire et/ou des algorithmes génétiques.

16. Procédé selon l'une quelconque des revendications 2 à 15, un contrat intelligent comprenant un programme d'ordinateur stocké dans et/ou exécuté par ladite chaine de blocs.

17. Système pour le partage de données aéronautiques comprenant :
- une chaine de blocs privée maintenue par une pluralité de parties prédéfinies et préalablement authentifiées; ladite chaine de blocs étant configurée pour l'exécution d'un ou de plusieurs contrats intelligents ;
- un ou plusieurs calculateurs aéronautiques, par exemple un système de gestion de vol ou FMS, associés directement à la chaîne de blocs en lecture et/ou écriture, et/ ou indirectement à la chaîne de blocs par l'intermédiaire d'un ou de plusieurs contrats intelligents ;
- lesdits un ou plusieurs contrats intelligents étant configurés pour exécuter des mécanismes de compensation en fonction de transactions portant sur des jeux de données échangés entre les parties prédéfinies.

18. Système selon la revendication 17, le mécanisme de compensation contrôlant des flux financiers et/ou des indicateurs de réputation et/ou les flux de données échangés.

19. Système selon la revendication 18, comprenant en outre une base de données centralisée et/ou une chaîne de blocs dite secondaire comprenant les données aéronautiques, lesdites données étant référencées ou indexées dans la chaîne de bloc privée dite principale.

20. Système selon l'une quelconque des revendications 17 à 19, comprenant en outre :
- un ou plusieurs réseaux de neurones, choisis parmi les réseaux de neurones comprenant : un réseau de neurones artificiels ; un réseau de neurones artificiels acyclique ; un réseau de neurones récurrents ; un réseau de neurones à propagation avant ; un réseau neuronal convolutif ; et/ou un réseau de neurones antagonistes génératifs ;
- lesdits un ou plusieurs réseaux de neurones
- étant émulés de manière logicielle par une chaine de blocs, principale ou secondaire, et/ou par un ou plusieurs contrats intelligents ; et/ou
- étant des circuits physiques dont les entrées et les sorties sont contrôlables par lesdites chaînes de blocs et/ou par un ou plusieurs contrats intelligents.
